# EUROPEAN PATENT APPLICATION

(11) **EP 3 543 083 A1**
(43) Date of publication of application: **25.09.2019**
(21) Application number: 19158275.8
(22) Date of filing: 20.02.2019
(51) Int. Cl.: B61L 3/12, B61L 15/00, G08C 17/02, H04Q 9/00

(54) **SYSTEMS, METHODS AND DEVICES FOR OPERATOR CONTROL UNIT DISPLAY EXTENSION**

(30) Priority: 21.03.2018 US 201862646313 P; 25.01.2019 US 201916257974
(71) Applicant: Laird Technologies, Inc., Chesterfield, MO 63017 (US)
(72) Inventor: TRANG, Chan-Dara, Chesterfield, Missouri 63017 (US); JOVENALL, Jeremy, Chesterfield, Missouri 63017 (US)
(74) Representative: AWA Sweden AB

(57) **Abstract**

According to various aspects, exemplary embodiments are disclosed of systems, methods and devices related to extended operator control unit displays. In an exemplary embodiment, an extended operator control unit display system includes an operator control unit configured for wireless communication with a locomotive control unit coupled to a locomotive to control operation of the locomotive. The operator control unit includes a first wireless interface configured to transmit one or more commands to the locomotive control unit, and an auxiliary wireless interface. The system also includes a mobile computing device. The mobile computing device has a user interface and a mobile wireless interface configured for wireless communication with the auxiliary wireless interface of the operator control unit. The mobile computing device is configured to receive status information data from the operator control unit and display the received status information data on the user interface.

## Description

### FIELD

The present disclosure generally relates to systems, methods and devices for operator control unit display extension.

### BACKGROUND

This section provides background information related to the present disclosure which is not necessarily prior art.

In the remote control locomotive (RCL) industry, a device used by the operator to control the locomotive wirelessly is commonly called an operator control unit (OCU). These devices typically require very rugged design to operate in the rail environment. One challenge with such a design is the creation of a flexible, useful, *etc.* user interface that is usable in required environments.

### DRAWINGS

The drawings described herein are for illustrative purposes only of selected embodiments and not all possible implementations, and are not intended to limit the scope of the present disclosure.
FIG. 1 is a block diagram of an extended operator control unit display system according to one example embodiment of the present disclosure;
FIG. 2 is a block diagram of the example operator control unit shown in FIG. 1;
FIG. 3 is a block diagram of the example mobile computing device shown in FIG. 1; and
FIG. 4 is a block diagram of an extended operator control unit display system having a mobile computing device at a fixed location, according to another example embodiment of the present disclosure.

Corresponding reference numerals indicate corresponding parts throughout the several views of the drawings.

### DETAILED DESCRIPTION

Example embodiments will now be described more fully with reference to the accompanying drawings.

In the rail remote control industry, a device used by an operator to control a locomotive wirelessly is commonly called an operator control unit (OCU). These devices typically require very rugged design to operate in the rail environment. One challenge with such a design is the creation of a flexible, useful, *etc*. user interface that is usable in required environments.

Disclosed herein are exemplary embodiments of systems, methods and devices for extending a display for an operator control unit. In some embodiments, an operator control unit (OCU) may incorporate a mobile computing device, *etc*. into an operator control unit design to provide a flexible and customizable user interface for the operator control unit.

For example, an operator control unit may include one or more auxiliary wireless ports, such as a short-range wireless communication interface (*e*.*g*., BLUETOOTH), a Wi-Fi wireless communication interface, *etc*. An operator control unit (which may or may not include a display), could use an auxiliary wireless interface to communicate with (*e*.*g*., tether to, *etc*.) a mobile computing device such as a smartphone, a tablet computer, *etc.* The mobile computing device could include a user interface that may be customizable (*e*.*g*., via an application stored on the mobile computing device, *etc*.). For example, customizations of the user interface could include a user interface (UI) layout, a dataset, one or more colors of the user interface, size(s) of one or more gauges displayed on the user interface, *etc*.

In some embodiments, the operator control unit could include a bracket for mounting the mobile computing device to the operator control unit. Alternatively, or in addition, a ruggedized carrying apparatus may allow a user to attach, couple, mount, *etc*. the mobile device on the body of the user. For example, the mobile computing device could be mounted on a user's forearm or any other suitable location.

In other embodiments, a mobile computing device could be positioned in a fixed location to provide a video feed. For example, the mobile computing device could provide a video feed for a specified operation (*e*.*g*., monitoring a grade crossing, *etc*.). When an operator logs into a kiosk via a user name and password, an electronic user confirmation, *etc*., operator control unit data could be superimposed over the video feed (*e*.*g*., streaming video). In some cases, a degree of control could be relayed through the mobile computing device in the kiosk back to the operator control unit, and in turn to a remote control locomotive (RCL) system.

As more control and operator control unit functionality is moved to the mobile computing device, a smaller operator control unit could be realized. For example, in a case where most functionality occurs on the mobile computing device, the operator control unit could be reduced to something a safety emergency stop device, *etc*., to provide emergency stop and tilt sensor functionality.

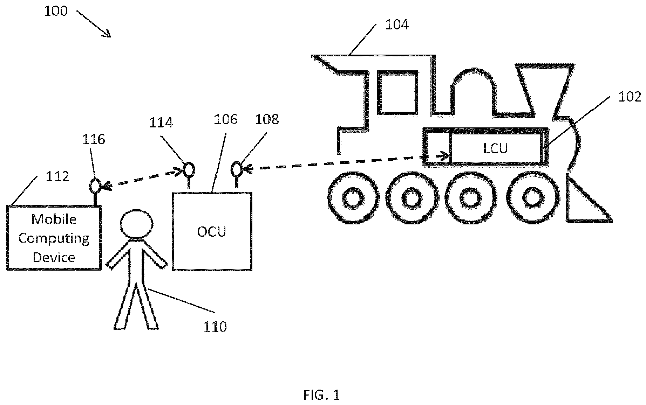

With reference to the figures, FIG. 1 illustrates an example extended operator control unit display system 100 according to some aspects of the present disclosure. The system 100 includes a locomotive control unit 102 coupled to a locomotive 104. The locomotive control unit 102 is configured to control operation of the locomotive 104, and may include any suitable locomotive control unit (*e*.*g*., machine control unit, *etc*.) as described herein.

The system 100 also includes an operator control unit 106 in wireless communication with the locomotive control unit 102. The operator control unit 106 includes a first wireless interface 108 configured to transmit one or more commands to the locomotive control unit 102. For example, as described herein, the operator control unit 106 may receive commands from an operator 110, and transmit the commands to the locomotive control unit 102 to control the locomotive 104.

As shown in FIG. 1, the system 100 further includes a mobile computing device 112. The mobile computing device 112 includes a user interface and a mobile wireless interface 116. The mobile wireless interface 116 is in wireless communication with the auxiliary wireless interface 114 of the operator control unit 106. The mobile computing device 112 is configured to receive status information data from the operator control unit 106 and display the received status information data on the user interface of the mobile computing device 112.

As described above, the operator control unit 106 includes a first wireless interface 108 and an auxiliary wireless interface 114. The first wireless interface 108 may be separate from the auxiliary wireless interface 114, and may operate according to a different wireless communication protocol.

For example, the first wireless interface 108 may be a radio frequency (RF) wireless interface for establishing an RF communication channel between the operator control unit 106 and the locomotive control unit 102. The auxiliary wireless interface 114 may be a short-range wireless communication interface (*e*.*g*., BLUETOOTH), a Wi-Fi wireless communication interface, *etc*. for establishing communication channel between the operator control unit 106 and the mobile computing device 112. Therefore, the operator control unit 106 may communicate with the locomotive control unit 102 and the mobile computing device 112 via separate wireless communication channels.

In some embodiments, the mobile computing device 112 may be coupled, mounted, attached, *etc*. to the operator control unit 106. For example, the operator control unit 106 may include a bracket, and the mobile computing device 112 could be mounted to the operator control unit 106 via the bracket.

In other embodiments, the mobile computing device 112 may be wearable by the operator 110 of the operator control unit 106. For example, the operator 110 could wear a ruggedized apparatus to secure the mobile computing device 112 to a portion of the operator's body (*e*.*g*., the operator's forearm, *etc*.).

The mobile computing device 112 may display any suitable information of the operator control unit 106 to the operator 110. For example, the mobile computing device 112 may display a switch list, a video feed (*e*.*g*., fixed cameras in a yard, fixed cameras in a locomotive, a video link from a monitoring drone), *etc.* As described further below, the mobile computing device 112 may display a video stream when an authorized user approaches.

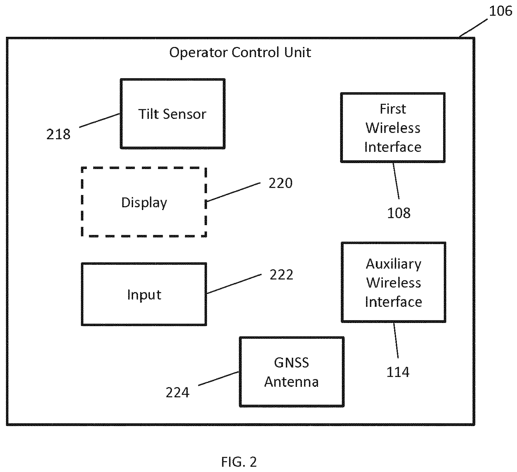

FIG. 2 illustrates a block diagram of the operator control unit 106 shown in FIG. 1. The operator control unit 106 includes an input 222, which can include any suitable input element(s) (*e*.*g*., a keypad, touchscreen, switches, *etc*.). The input 222 can receive inputs (*e*.*g*., commands, *etc*.) from the operator 110. The user interface may include a display 220, which can be any suitable display (*e*.*g*., a liquid crystal display (LCD), light emitting diodes (LED), indicator lights, *etc*.). In other embodiments, the operator control unit 106 may not include a display.

As described above, the operator control unit 106 also includes a first wireless interface 108 and an auxiliary wireless interface 114. The first wireless interface 108 may communicate with the locomotive control unit 102 via an RF channel, and the auxiliary wireless interface 114 may communicate with the mobile computing device 112 via a short-range wireless communication connection, a Wi-Fi connection, *etc.*

The operator control unit 106 may include a global navigation satellite system (GNSS) antenna 224 for determining a location of the operator control unit 106. For example, the GNSS antenna 224 may be a global positioning system (GPS) antenna. Additionally, or alternatively, the operator control unit 106 can include a tilt sensor 218. For example, the operator control unit 106 may be configured to transmit an emergency brake command to the locomotive control unit 102 when the tilt sensor 218 detects a tilt event for a specified tilt duration of time (*e*.*g*., five seconds, thirty seconds, one minute, *etc*.). Additionally, or alternatively, the operator control unit 106 could include an emergency stop button.

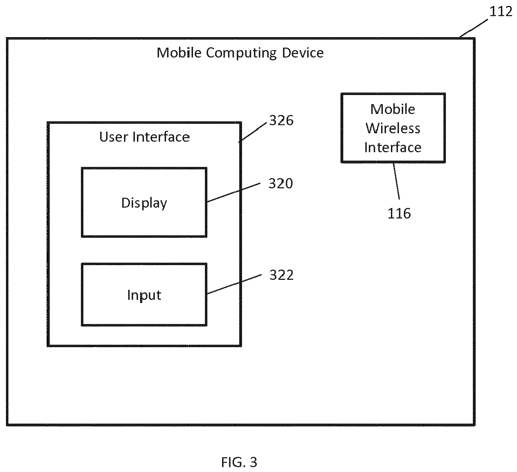

FIG. 3 illustrates a block diagram of the mobile computing device 112 shown in FIG. 1. The mobile computing device 112 may include any suitable mobile device such as a smartphone, a tablet computer, *etc*. The mobile computing device 112 includes a user interface 326 having a display 320 and an input 322. The display 320 can be any suitable display (*e*.*g*., a liquid crystal display (LCD), light emitting diodes (LED), indicator lights, *etc*.). The input 322 can include any suitable input element(s) (*e*.*g*., a keypad, touchscreen, switches, *etc*.) for receiving inputs from the operator 110.

The user interface 326 may be customizable (*e*.*g*., via an application stored on the mobile computing device 112, *etc*.). For example, the user interface may be customizable to define a user interface layout, a dataset, one or more colors, a size of one or more gauges on the display 320, *etc*.

In some embodiments, the mobile computing device 112 can be configured to receive command(s) from the operator 110 via the user interface 326, and to transmit the command(s) to the operator control unit 106 via the auxiliary wireless interface 114 to be relayed to the locomotive control unit 102.

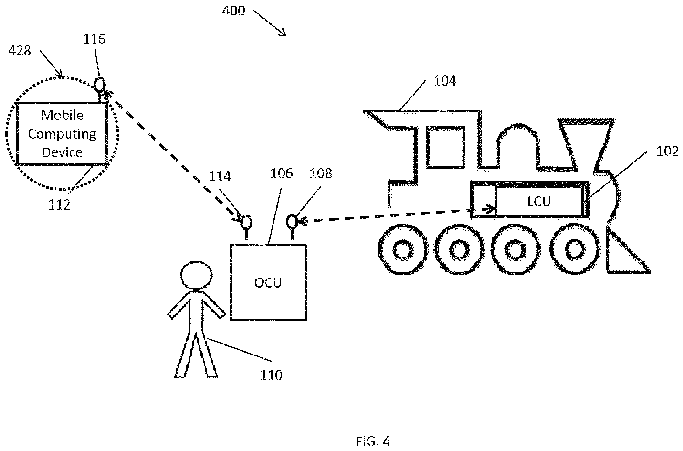

FIG. 4 illustrates an example system 400 according to another example embodiment of the present disclosure. The system 400 is similar to the system 100 of FIG. 1, but the mobile computing device 112 is located or positioned at a fixed location 428. In this case, the mobile computing device 112 could provide a video feed. For example, the video feed may include a specified operation, such as monitoring a grade crossing, *etc*.

The fixed location 428 could be a kiosk. In that case, the kiosk could be configured to allow a user to login to the kiosk via an authentication protocol, and in response to a successful login, the mobile computing device 112 could be configured to superimpose data from the operator control unit 106 over the video feed.

As described herein, the example operator control units and mobile computing devices may include a microprocessor, microcontroller, integrated circuit, digital signal processor, *etc*., which may include memory. The operator control units and mobile computing devices may be configured to perform (*e*.*g*., operable to perform, *etc*.) any of the example processes described herein using any suitable hardware and/or software implementation. For example, the operator control units and mobile computing devices may execute computer-executable instructions stored in a memory, may include one or more logic gates, control circuitry, *etc*.

According to another example embodiment, an operator control unit for a locomotive includes a first wireless interface. The first wireless interface is in wireless communication with a locomotive control unit coupled to a locomotive to control operation of the locomotive. The first wireless interface is configured to transmit one or more commands to the locomotive control unit.

The operator control unit also includes an auxiliary wireless interface. The auxiliary wireless interface is in wireless communication with a mobile computing device. The auxiliary wireless interface is configured to transmit status information data of the operator control unit from the operator control unit to a mobile computing device to display the transmitted status information data on a user interface of the mobile computing device.

According to another example embodiment, an exemplary method of extending a display for an operator control unit is disclosed. The operator control unit is in wireless communication with a locomotive control unit coupled to a locomotive to control operation of the locomotive, and the operator control unit includes a first wireless interface and an auxiliary wireless interface.

The exemplary method generally includes transmitting one or more commands to the locomotive control unit via the first wireless interface to control the locomotive, and transmitting status information data of the operator control unit from the operator control unit to a mobile computing device via the auxiliary wireless interface to display the transmitted status information data on a user interface of the mobile computing device. In some embodiments, the user interface is customizable to define at least one of a user interface layout, a dataset, one or more colors, and a size of one or more gauges.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purposes of illustration only and do not limit the scope of the present disclosure, as exemplary embodiments disclosed herein may provide all or none of the above mentioned advantages and improvements and still fall within the scope of the present disclosure.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i*.*e*., the disclosure of a first value and a second value for a given parameter can be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (*e*.*g*., "between" versus "directly between," "adjacent" versus "directly adjacent," *etc*.). As used herein, the term "and/or" includes any and all combinations of one or more of the associated listed items.

Although the terms first, second, third, *etc*. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. An operator control unit comprising:
a first wireless interface configured for wireless communication with a locomotive control unit coupled to a locomotive to control operation of the locomotive, the first wireless interface configured to transmit one or more commands to the locomotive control unit; and
an auxiliary wireless interface configured for wireless communication with a mobile computing device, the auxiliary wireless interface configured to transmit status information data of the operator control unit from the operator control unit to the mobile computing device to display the transmitted status information data on a user interface of the mobile computing device.

2. An extended operator control unit display system comprising the operator control unit of claim 1, and a mobile computing device including a user interface and a mobile wireless interface configured for wireless communication with the auxiliary wireless interface of the operator control unit, the mobile computing device configured to receive status information data from the operator control unit and display the received status information data on the user interface.

3. The system of claim 2, wherein:
the auxiliary wireless interface includes a short-range wireless communication interface or a Wi-Fi wireless communication interface; and/or
the first wireless interface is a radio frequency wireless interface.

4. The system of claim 2 or 3, wherein the auxiliary wireless interface includes a BLUETOOTH short-range wireless communication interface.

5. The system of any one of claims 2 to 4, wherein:
the mobile computing device includes a smartphone or a tablet computer; and/or
the mobile computing device is wearable by an operator of the operator control unit.

6. The system of any one of claims 2 to 5, wherein the user interface is customizable to define at least one of a user interface layout, a dataset, one or more colors, and a size of one or more gauges.

7. The system of any one of claims 2 to 6, wherein:
the operator control unit includes a bracket; and
the mobile computing device is coupled to the bracket.

8. The system of any one of claims 2 to 7, wherein the mobile computing device is positioned in a fixed location to provide a video feed.

9. The system of claim 8, wherein:
the video feed includes monitoring of a grade crossing; and/or
the fixed location includes a kiosk; the kiosk is configured to allow a user to login to the kiosk via an authentication protocol; and in response to a successful login, the mobile computing device is configured to superimpose data from the operator control unit over the video feed.

10. The system of any one of claims 2 to 9, wherein the mobile computing device is configured to:
receive one or more control commands via the user interface; and
transmit the received one or more control commands to the operator control unit via the auxiliary wireless interface to be relayed to the locomotive control unit.

11. The system of any one of claims 2 to 10, wherein the operator control unit includes at least one of an emergency stop button and a tilt sensor for sending an emergency stop signal to the locomotive control unit.

12. The system of any one of claims 2 to 11, wherein the operator control unit includes a display.

13. The system of any one of claims 2 to 11, wherein the operator control unit does not include a display.

14. The system of any one of claims 2 to 13, further comprising the locomotive control unit coupled to the locomotive.

15. A method of extending a display for an operator control unit, the operator control unit in wireless communication with a locomotive control unit coupled to a locomotive to control operation of the locomotive, the operator control unit including a first wireless interface and an auxiliary wireless interface, the method comprising:
transmitting one or more commands to the locomotive control unit via the first wireless interface to control the locomotive; and
transmitting status information data of the operator control unit from the operator control unit to a mobile computing device via the auxiliary wireless interface to display the transmitted status information data on a user interface of the mobile computing device.
